# EUROPEAN PATENT APPLICATION

(11) **EP 4 760 936 A1**
(43) Date of publication of application: **17.06.2026**
(21) Application number: 24953274.8
(22) Date of filing: 05.11.2024
(51) Int. Cl.: H01M 50/298, H01M 50/30

(54) **BATTERY MODULE**

(30) Priority: 05.09.2024 CN 202422185501 U
(71) Applicant: Eve Energy Co., Ltd., Huizhou, Guangdong 516006 (CN)
(72) Inventor: ZHANG, Minglang, Huizhou, Guangdong 516006 (CN)
(74) Representative: Herrero & Asociados, S.L.
(86) International application number: PCT/CN2024/130005
(87) International publication number: WO 2026/051189

(57) **Abstract**

The present disclosure provides a battery module. The battery module includes a plurality of battery cells and an exhaust structure. The extension portions of the exhaust structure are provided to be fixedly connected with the plurality of busbars. By connecting the extension portions to the busbars, the exhaust structure is fixed on the top of the battery cells. The exhaust structure is integrally mounted on top of the battery cells, resulting in a structurally stable battery module. Meanwhile, mutual clearance between the busbars and the exhaust structure is avoided, facilitating subsequent connections between the busbars and the negative and positive electrodes, as well as facilitating subsequent sealing connection of the exhaust structure to the explosion-proof valves.

## Description

This disclosure claims priority from Chinese patent application No. 2024221855013 filed with the China National Intellectual Property Administration on September 05, 2024, the entire content of which is incorporated herein by reference.

### TECHNICAL FIELD

The present disclosure relates to the technical field of battery manufacturing equipment, and in particular, to a battery module.

### BACKGROUND

In some battery modules, both positive and negative electrodes of the battery are disposed on the top of the battery. Busbars need to be arranged at the top of the batteries and electrically connected with the positive and negative electrodes to achieve series or parallel connections among multiple batteries. The explosion-proof valve of the battery is also located at the top of the battery, usually positioned between the positive and negative electrodes. When thermal runaway occurs in one or more batteries, the high-temperature ejection from the battery is discharged through the explosion-proof valve, contaminating surrounding busbars and leading to a short circuit of multiple batteries.

### TECHNICAL PROBLEM

Therefore, in some related technologies, an exhaust structure is arranged to guide the discharge of thermal runaway gases. Since the explosion-proof valve is also located at the top of the battery, there is often interference between the exhaust structure and the busbars, causing difficulty in positioning and fixing the exhaust structure. If the exhaust structure covers the top of the battery, it will be inconvenient for the connection between the busbars and the positive and negative electrodes. If the exhaust structure is placed above the busbars, it is likely to cause poor sealing between the exhaust structure and the explosion-proof valve, resulting in leakage of ejections.

### TECHNICAL SOLUTION

The present disclosure provides a battery module, comprising:
a plurality of battery cells arranged along a first direction, each of the battery cells having an explosion-proof valve and a positive electrode and a negative electrode disposed respectively on two sides of the explosion-proof valve along a second direction, wherein the first direction intersects with the second direction;
an exhaust structure comprising a main body portion and extension portions connected to two sides of the main body portion along the second direction, wherein both the main body portion and the extension portions extend along the first direction, the main body portion covers the explosion-proof valves of the plurality of battery cells, and the extension portions are configured to be connected with busbars.

### BENEFICIAL EFFECTS

The advantageous effects of the battery module provided by the present disclosure are as follows: compared with related art, the battery module of the present disclosure includes a plurality of battery cells and an exhaust structure, wherein the extension portions of the exhaust structure are configured to be fixedly connected with a plurality of busbars. The exhaust structure is fixed on top of the battery cells by connecting the extension portions to the busbars. Integrated mounting of the exhaust structure at the top of the battery cells makes the overall structure of the battery module stable, and mutual clearance is formed between the busbars and the exhaust structure, facilitating subsequent connection between the busbars and the positive and negative electrodes, and also facilitating subsequent sealing cooperation between the exhaust structure and the explosion-proof valves. Thus, the battery module provided by the present disclosure features a simple and stable overall structure and convenient installation.

### BRIEF DESCRIPTION OF THE DRAWINGS

FIG. 1 is a schematic perspective view of a battery module provided according to an embodiment of the present disclosure;
FIG. 2 is a schematic structural view of a battery cell in the battery module provided according to an embodiment of the present disclosure;
FIG. 3 is a schematic cross-sectional view of the battery module provided according to an embodiment of the present disclosure;
FIG. 4 is a schematic perspective view of an exhaust structure in the battery module provided according to an embodiment of the present disclosure;
FIG. 5 is a schematic cross-sectional view of the exhaust structure in the battery module provided according to an embodiment of the present disclosure;
FIG. 6 is a schematic perspective view of the exhaust structure and sealing layer in the battery module provided according to an embodiment of the present disclosure.

In the drawings, reference numerals are indicated as follows:
Battery module 100; Battery cell 10; Exhaust structure 20; Busbar 30; Sealing layer 40; Connecting member 50;
Battery cell main body 11; Explosion-proof valve 12; Positive electrode 13; Negative electrode 14; Main body portion 21; Extension portion 22; First reinforcing rib 23; Second reinforcing rib 24; First end portion 31; Second end portion 32;
Top wall 211; Side wall 212; Bottom wall 213; Exhaust channel I; Exhaust port K1; Clearance opening K2; Through hole K3;
First direction X; Second direction Y.

### EMBODIMENTS OF THE INVENTION

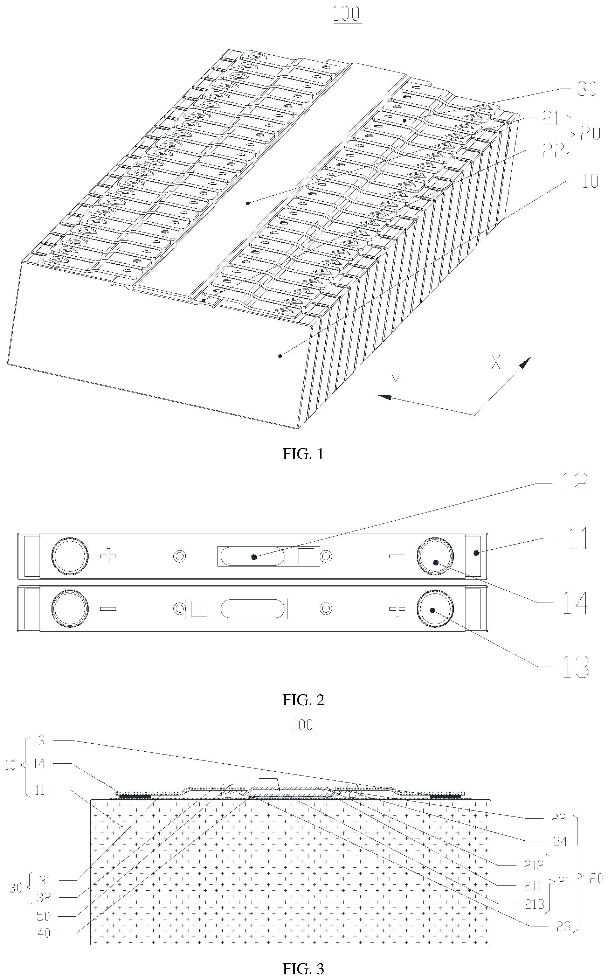

Please refer to FIG. 1 to FIG. 6 together, a battery module 100 according to an embodiment of the present disclosure will now be described. The battery module 100 of the present disclosure includes a plurality of battery cells 10, an exhaust structure 20, and a plurality of busbars 30. As shown in FIG. 1, the plurality of battery cells 10 are arranged along a first direction X. In the present embodiment, the battery cells 10 are prismatic battery cells. As shown in FIG. 2, each battery cell 10 includes a battery cell main body 11, an explosion-proof valve 12, a positive electrode 13, and a negative electrode 14 provided on the battery cell main body 11. That is, the top of each battery cell 10 is provided with the explosion-proof valve 12, and the positive electrode 13 and negative electrode 14 respectively disposed on two opposite sides of the explosion-proof valve 12 along a second direction Y. The first direction X intersects with the second direction Y. In the present embodiment, the first direction X is perpendicular to the second direction Y.

Optionally, the positive electrodes 13 and negative electrodes 14 of two adjacent battery cells 10 are arranged oppositely. Specifically, the positive electrode 13 of a first battery cell 10 is positioned on the left side and the negative electrode 14 is positioned on the right side, while in a second battery cell 10, the negative electrode 14 is positioned on the left side and the positive electrode 13 is positioned on the right side, and so forth, to facilitate the series connection of multiple battery cells 10 arranged in sequence.

The exhaust structure 20 includes a main body portion 21 and two extension portions 22. Both the main body portion 21 and the extension portions 22 extend along the first direction X. The main body portion 21 covers the explosion-proof valves 12 of the plurality of battery cells 10. The two extension portions 22 extend respectively and are disposed on two sides of the main body portion 21 along the first direction X, and the two extension portions 22 are each configured to be connected to the busbars 30 on the corresponding side.

The busbar 30 is correspondingly connected to a negative electrode 14 or a positive electrode 13 provided on the top of the battery cell 10, and the plurality of busbars 30 are arranged along the first direction X on both sides of the main body portion 21 and are respectively connected to the corresponding extension portions 22. Specifically, the battery cell 10 is provided with two busbars 30, which are respectively connected to the positive electrode 13 and the negative electrode 14. The two busbars 30 are separately disposed on two sides of the main body portion 21 of the exhaust structure 20. The busbars 30 disposed on a first side of the main body portion 21 are fixed to the extension portion 22 disposed on the first side of the main body portion 21, and the busbars 30 disposed on a second side of the main body portion 21 are fixed to the extension portion 22 disposed on the second side of the main body portion 21. The plurality of busbars 30 are arranged in two rows along the first direction X corresponding to the arrangement of the plurality of battery cells 10.

In the present embodiment, the extension portions 22 are made of an insulating material, thus the plurality of busbars 30 are fixed onto the extension portions 22 to avoid short circuits. Optionally, the extension portions 22 and the main body portion 21 are integrally formed and prepared by extrusion using Thermoplastic Urethane (TPU).

The battery module 100 provided by the embodiment of the present disclosure includes a plurality of battery cells 10 and the exhaust structure 20, wherein the extension portions 22 of the exhaust structure 20 are connected and fixed to the plurality of busbars 30. The exhaust structure 20 is fixed on top of the battery cells 10 by connecting the busbars 30 to the positive electrodes 13 or negative electrodes 14 of the battery cells 10. The integrated arrangement of the busbars 30 and the exhaust structure 20 on top of the battery cells 10 provides a stable overall structure of the battery module 100, forming mutual clearance between the busbars 30 and the exhaust structure 20 to facilitate subsequent connection of the busbars 30 to the negative electrodes 14 and positive electrodes 13, and also facilitating subsequent sealing cooperation between the exhaust structure 20 and the explosion-proof valves 12. The battery module 100 of the present disclosure has a simple, stable overall structure and is convenient for installation. In addition, it can be understood that by providing extension portions 22 on both sides and the plurality of busbars 30 to fix the main body portion 21 from both sides, the exhaust structure 20 can be further reinforced to avoid overturning or moving of the exhaust structure 20.

Optionally, as shown in FIG. 3, each busbar 30 has a first end portion 31 and a second end portion 32. The first end portion 31 is connected to the corresponding positive electrode 13 or negative electrode 14, and the second end portion 32 overlaps onto a surface of the extension portion 22 facing away from the battery cells 10, and is fixedly connected to the extension portion 22 via a connecting member 50. Specifically, a bent structure is provided between the first end portion 31 and the second end portion 32 of the busbar 30, so that after the first end portion 31 is connected with the positive electrode 13 or negative electrode 14, the second end portion 32 is able to overlap onto the extension portion 22 for fixation. The main body portion 21 and the extension portions 22 are provided at the top of the battery cells 10 to facilitate cooperation with the explosion-proof valves 12.

During installation, the exhaust structure 20 may first be aligned and placed on top of the battery cells 10, then the plurality of busbars 30 may be individually connected and fixed to the extension portions 22 of the exhaust structure 20, and the other ends of the busbars 30 are connected to the positive electrodes 13 or negative electrodes 14. By first assembling the exhaust structure 20 on top of the battery cells 10 and then fixing via the plurality of busbars 30, the overall assembly is made convenient.

In the present embodiment, the connecting member 50 is a rivet. Specifically, multiple through-holes are provided on the extension portion 22, allowing the connecting members 50 to pass through and be fixed thereto. Optionally, in some other embodiments, the connecting member 50 may alternatively be a screw or the like.

Optionally, in some other embodiments, the second end portion 32 of the busbar 30 is arranged between the extension portion 22 and the battery cell 10, and fixedly connected to the extension portion 22 via the connecting member 50. During assembling, the busbars 30 are first connected and fixed on the top of the battery cells 10, then the exhaust structure 20 is covered onto the battery cells 10 and the second end portions 32 of the busbars 30, and then the exhaust structure 20 is fixedly connected to the second end portions 32 of the busbars 30.

As shown in Fig. 3, the main body portion 21 includes a top wall 211, a bottom wall 213, and two side walls 212. The bottom wall 213 is disposed on the battery cells 10, the top wall 211 is disposed at a side of the bottom wall 213 facing away from the battery cells 10, and the side walls 212 connect between the bottom wall 213 and the top wall 211. The extension portions 22 are connected to the side walls 212 of the main body portion 21, thus ensuring a smaller distance between the bottom wall 213 and the explosion-proof valves 12, which facilitates venting of gases from the explosion-proof valves 12 into the main body portion 21 during thermal runaway.

Optionally, in some other embodiments, the extension portions 22 may connect to the bottom wall 213 or to the top wall 211.

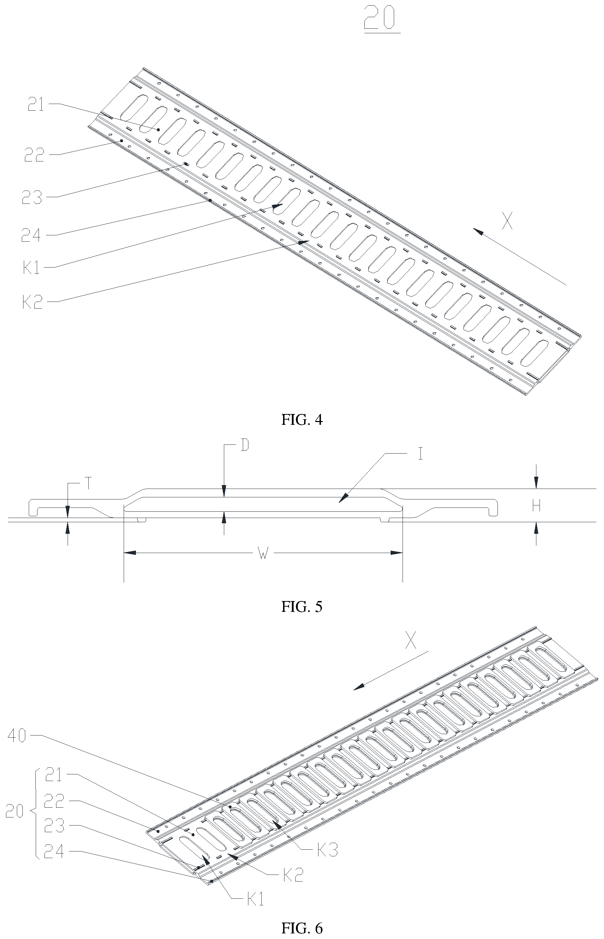

As shown in Fig. 4, the top wall 211, bottom wall 213, and two side walls 212 cooperatively define an exhaust channel I. The exhaust channel I extends along the first direction X. Multiple exhaust ports K1 communicating with the exhaust channel I are provided on the bottom wall 213, wherein one exhaust port K1 corresponds to one explosion-proof valve 12 respectively. Gas discharged from the explosion-proof valve 12 enters into the exhaust channel I of the main body portion 21 through the exhaust port K1.

The exhaust channel I, defined by the top wall 211, bottom wall 213, and two side walls 212, serves to guide and discharge the gas vented from the explosion-proof valves 12. In the present embodiment, the second end portions 32 of the busbars 30 overlap onto the surface of the exhaust structure 20 facing away from the battery cells 10, and the top wall 211, side walls 212, and bottom wall 213 together define the exhaust channel I, thus preventing high-temperature ejection from spraying onto the surface of the busbars 30.

Optionally, the orthographic projection of the ejection outlet of the explosion-proof valve 12 onto the top of the battery cell 10 is located within the orthographic projection of the exhaust port K1 onto the top of the battery cell 10. It can be understood that the exhaust port K1 is larger than the ejection outlet, thus allowing high-temperature gas to enter the exhaust channel I from the exhaust port K1 as much as possible, reducing the likelihood of high-temperature gas leakage.

In the present embodiment, in the orthographic projection pattern onto the top of the battery cell 10, a distance between a boundary line of the ejection outlet of the explosion-proof valve 12 and a boundary line of the exhaust port K1 is 1 mm to 2 mm, for example, 1 mm, 1.1 mm, 1.2 mm, 1.3 mm, 1.4 mm, 1.5 mm, 1.7 mm, 1.8 mm, 1.9 mm, or 2 mm, etc. It can be understood that if the exhaust port K1 is too small, the gas discharged from the ejection outlet of the explosion-proof valve 12 cannot fully enter the exhaust channel I through the exhaust port K1. Conversely, if the exhaust port K1 is too large, the gas discharged from the ejection outlet of the explosion-proof valve 12 is prone to leaking sideways from the edges of the exhaust port K1 rather than entering the exhaust channel I. Thus, setting the distance between the boundary line of the ejection outlet of the explosion-proof valve 12 and boundary line of the exhaust port K1 to be 1 mm-2 mm ensures that high-temperature gas effectively enters the exhaust channel I through the exhaust port K1.

As shown in Fig. 5, the width of the exhaust channel I is W, and the height of the exhaust channel I is D, wherein W/D ≥17, for example, W/D is 17, 17.1, 17.14, 17.5, 17.6, 18, or 19, etc. Since the exhaust structure 20 is disposed on top of the battery cells 10, the height of the exhaust channel I will affect the height of the exhaust structure 20 and consequently affect the overall height of the battery module 100. By setting W/D ≥17, the height occupied by the exhaust structure 20 can be reduced, thus reducing the overall height of the battery module 100 while ensuring cross-sectional area of the exhaust channel I. In this embodiment, the specification of battery cells 10 is LF230, and the gas production volume of the battery cell 10 is V=201 L/min. Thus, the cross-sectional area S of the exhaust channel I is set to be ≥180 mm² to ensure that the exhaust channel I can accommodate gases discharged from the plurality of battery cells 10.

Specifically, the top wall 211, bottom wall 213, and side walls 212 of the main body portion 21 enclose a trapezoidal-shaped exhaust channel I. The length of the upper side of the exhaust channel I is 56 mm, the length of the lower side is 65 mm, and thus the average length of the exhaust channel I is approximately 60 mm. The height of the exhaust channel I is 3.5 mm, thus W/D≈17.14, greater than 17, and the cross-sectional area S is 211 mm², greater than 180 mm².

As shown in Fig. 5, the exhaust structure 20 further includes a first reinforcing rib 23 and a second reinforcing rib 24 extending along the first direction X.

The first reinforcing rib 23 is disposed on the side of the bottom wall 213 close to the battery cells 10, and the first reinforcing rib 23 is positioned at least on one side of the exhaust port K1 in the first direction X. Specifically, the exhaust structure 20 includes two first reinforcing ribs 23 respectively disposed on two sides of the exhaust port K1 in the first direction X, that is, the two first reinforcing ribs 23 are symmetrically arranged on the main body portion 21. The first reinforcing ribs 23 disposed on the side of the bottom wall 213 near the battery cells 10 can enhance the structural strength of the main body portion 21 and provide support and positional restriction when the main body portion 21 receives downward pressure.

The number of second reinforcing ribs 24 is also two. The two second reinforcing ribs 24 are respectively disposed on the two extension portions 22 on both sides of the main body portion 21. A first reinforcing rib 23 is provided on an extension portion 22. On the one hand, it enhances the structural strength of the extension portion 22; on the other hand, when the extension portion 22 is subjected to downward pressure, the second reinforcing rib 24 can provide support and limit the deformation of the extension portion 22. Optionally, the thickness of the second reinforcing ribs 24 is equal to that of the extension portions 22, significantly enhancing the structural strength of the extension portions 22. Specifically, the thickness of the second reinforcing ribs 24 is 2 mm, and the thickness of the extension portions 22 is 2 mm.

Optionally, a total height of the exhaust structure 20 is H, and the thickness of the first reinforcing ribs 23 is T, wherein H/T= (5 to 10), for example, H/T=5, 6, 7, 8, 9 or 10, etc. In the present embodiment, the total height H of the exhaust structure 20 is 8 mm, and the thickness T of the first reinforcing ribs 23 is 1 mm, thus H/T=8.

Optionally, in some other embodiments, the total height H of exhaust structure 20 is 10 mm, and the thickness T of the first reinforcing ribs 23 is 2 mm, thus H/T=5.

It can be understood that the hollow exhaust channel I is formed within the main body portion 21. If excessively thick first reinforcing ribs 23 are provided on the bottom wall 213, this will easily cause deformation of the bottom wall 213, adversely affecting the structural strength of the main body portion 21. Therefore, setting H/T= (5 to 10) enhances the structural strength of main body portion 21 while avoiding excessive thickness of the first reinforcing ribs 23.

As shown in FIG. 6, to enhance the sealing connection between the exhaust structure 20 and the explosion-proof valve 12, the battery module 100 further includes a plurality of sealing layers 40. A sealing layer 40, an exhaust port K1, and an explosion-proof valve 12 are provided in correspondence. The sealing layer 40 is disposed between the exhaust structure 20 and the explosion-proof valve 12, with two opposite surfaces of the sealing layer 40 respectively abutting against the bottom wall 213 and the top of the battery cell 10. The sealing layer 40 is provided with a through hole K3. The through hole K3 corresponds to the explosion-proof valve 12 and communicates with the exhaust port K1, enabling gas discharged from the explosion-proof valve 12 to pass through. The provision of the sealing layer 40 enhances the sealing effect between the exhaust structure 20 and the explosion-proof valve 12, preventing gas discharged from the explosion-proof valve 12 from leaking through gaps between the exhaust structure 20 and the battery cell 10. Specifically, multiple clearance openings K2 are provided on the first reinforcing rib 23, and a sealing layer 40 is correspondingly disposed in a clearance opening K2. The first reinforcing rib 23 can limit and fix the sealing layer 40, preventing the sealing layer 40 from moving.

In the present embodiment, the sealing layer 40 is made of ceramizing silicone foam. During the assembly of the battery module 100, welding of the busbars 30 to the positive electrode 13 and negative electrode 14 of the battery cells 10 generates downward pressure on the busbars 30 and the exhaust structure 20. This downward pressure is transferred onto the sealing layer 40, causing the sealing layer 40 to compress, thereby further ensuring the sealing performance between the exhaust structure 20 and the explosion-proof valve 12.

In addition, ceramizing silicone foam undergoes sintering and curing when exposed to high-temperature gas jets, maintaining its original state without burning away. Therefore, the sealing layer 40 made of ceramizing silicone foam can effectively withstand high-temperature impacts during thermal runaway.

Optionally, the compression ratio of the sealing layer 40 is 30% to 60%, for example, 30%, 35%, 40%, 45%, 50%, 55%, or 60%, etc. On the one hand, when the busbars 30 are welded to the positive electrode 13 and negative electrode 14, the sealing layer 40 provides cushioning for the exhaust structure 20. On the other hand, the compression of sealing layer 40 under pressure effectively improves sealing performance. Specifically, in the present embodiment, the compression ratio of the sealing layer 40 is 40%. Before compression, the thickness of the sealing layer 40 is 2.5 mm, and after compression, the thickness of the sealing layer 40 is 1.5 mm.

The above description relates to the battery module 100 provided by the embodiment of the present disclosure.

The battery module provided by the embodiment of the present disclosure includes a plurality of battery cells and an exhaust structure. The extension portions of the exhaust structure are provided to be fixedly connected with the plurality of busbars. By connecting the extension portions to the busbars, the exhaust structure is fixed on the top of the battery cells. The exhaust structure is integrally mounted on top of the battery cells, resulting in a structurally stable battery module. Meanwhile, mutual clearance between the busbars and the exhaust structure is avoided, facilitating subsequent connections between the busbars and the negative and positive electrodes, as well as facilitating subsequent sealing connection of the exhaust structure to the explosion-proof valves. The battery module provided by the embodiment of the present disclosure has an overall structure that is simple, stable, and convenient for installation.

## Claims

1. A battery module, comprising:
a plurality of battery cells arranged along a first direction, a top of each of battery cell is provided with an explosion-proof valve and a positive electrode and a negative electrode disposed on two sides of the explosion-proof valve along a second direction respectively, wherein the first direction intersects with the second direction;
an exhaust structure comprising a main body portion and extension portions connected to two sides of the main body portion along the second direction, wherein both the main body portion and the extension portions extend along the first direction, the main body portion covers the explosion-proof valves of the plurality of battery cells, and the extension portions are configured to be connected with busbars.

2. The battery module according to claim 1, wherein the main body portion comprises a top wall, a bottom wall, and two side walls, the bottom wall is disposed on the battery cells, the top wall is disposed on a side of the bottom wall away from the battery cells, and the side walls are connected between the bottom wall and the top wall;
the extension portions are connected to the bottom wall, or the side wall, or the top wall;
the top wall, the bottom wall, and the two side walls together define an exhaust channel, the exhaust channel extends along the first direction, the bottom wall is provided with a plurality of exhaust ports communicating with the exhaust channel, and one said exhaust port corresponds to one said explosion-proof valve.

3. The battery module according to claim 2, wherein the width of the exhaust channel is W, the height of the exhaust channel is D, wherein W/D≥17, and the cross-sectional area S of the exhaust channel is ≥180 mm².

4. The battery module according to claim 2, wherein an orthographic projection of the explosion-proof valve onto the top of the battery cell is located within an orthographic projection of the exhaust port onto the top of the battery cell.

5. The battery module according to claim 4, wherein in an orthographic projection pattern onto the top of the battery cell, a distance between a boundary line of the explosion-proof valve and a boundary line of the exhaust port is 1 mm to 2 mm.

6. The battery module according to claim 2, wherein the exhaust structure further comprises a first reinforcing rib extending along the first direction, the first reinforcing rib is disposed on a surface of the bottom wall adjacent to the battery cells, and the first reinforcing rib is located on at least one side of the exhaust ports along the first direction.

7. The battery module according to claim 6, wherein a total height of the exhaust structure is H, a thickness of the first reinforcing rib is T, and H/T=(5~10).

8. The battery module according to claim 6, wherein the first reinforcing rib is provided with a plurality of clearance openings;
the battery module further comprises a plurality of sealing layers, one said sealing layer is correspondingly disposed in one said clearance opening, two sides of the sealing layer respectively abut against the bottom wall and the top of the battery cell, the sealing layer is provided with a through hole, the through hole corresponds to the explosion-proof valve, and the through hole communicates with the exhaust port.

9. The battery module according to claim 8, wherein the sealing layer is made of ceramizing silicone foam, and the compression ratio of the sealing layer is 30% to 60%.

10. The battery module according to claim 2, wherein the exhaust structure further comprises a second reinforcing rib extending along the first direction, and the second reinforcing rib is disposed on a surface of the extension portion adjacent to the battery cells.

11. The battery module according to claim 1, wherein the battery module further comprises a plurality of busbars, the plurality of busbars are disposed on the top of the battery cells and arranged along the first direction on two sides of the main body portion;
each of the busbars has a first end portion and a second end portion, the first end portion is connected to the corresponding positive electrode or negative electrode, the second end portion is connected to the extension portion by a connecting member, and the second end portion is disposed between the extension portion and the battery cells, or the second end portion overlaps onto a surface of the extension portion facing away from the battery cells.
